(19) Europäisches Patentamt
European Patent Office
Office européen des brevets

(11) **EP 2 514 793 A1**

(12) **EUROPEAN PATENT APPLICATION**

(43) Date of publication:
**24.10.2012 Bulletin 2012/43**

(51) Int Cl.:
*C09J 7/02* (2006.01)   *C09J 133/06* (2006.01)
*H01M 2/08* (2006.01)   *H01M 4/66* (2006.01)
*H01M 2/02* (2006.01)   *H01M 2/04* (2006.01)
*H01M 2/16* (2006.01)

(21) Application number: **11186278.5**

(22) Date of filing: **24.10.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **20.04.2011 JP 2011093784
20.04.2011 JP 2011093785**

(71) Applicant: **Nitto Denko Corporation
Ibaraki-shi
Osaka 567-8680 (JP)**

(72) Inventors:
• **Kiuchi, Kazuyuki
Ibaraki-shi, Osaka 567-8680 (JP)**
• **Hanai, Hiroomi
Ibaraki-shi, Osaka 567-8680 (JP)**
• **Kawabe, Shigeki
Ibaraki-shi, Osaka 567-8680 (JP)**
• **Kawanishi, Michirou
Ibaraki-shi, Osaka 567-8680 (JP)**

(74) Representative: **Grünecker, Kinkeldey,
Stockmair & Schwanhäusser
Leopoldstrasse 4
80802 München (DE)**

(54) **Pressure-sensitive adhesive tape for electrochemical device**

(57)    To provide a pressure-sensitive adhesive tape for an electrochemical device that has an extremely low water content, that is unlikely to lead to "adhesive protrusion", and that is not removed even when it is in contact with an electrolytic solution.

The pressure-sensitive adhesive tape for an electrochemical device of the present invention includes a pressure-sensitive adhesive layer composed of an acrylic pressure-sensitive adhesive on at least one side of a plastic base, and is characterized by including the pressure-sensitive adhesive layer having a gel content of 60% or more and a thickness of 1 to 15 $\mu$m, and by having a water absorption rate of 0.2% or less after immersion in water at 23°C for 24 hours. It is preferable that the acrylic pressure-sensitive adhesive is a copolymer of a monomer component including at least an alkyl (meth)acrylate containing an alkyl group having 6 to 10 carbon atoms and a monomer containing a group reactive with isocyanate, and that the monomer component includes the alkyl (meth)acrylate containing an alkyl group having 6 to 10 carbon atoms in an amount of 80% by weight or more.

[Fig. 1]

**Description**

[Technical Field]

The present invention relates to pressure-sensitive adhesive tapes for electrochemical devices, and in particular, relates to pressure-sensitive adhesive tapes used for parts that are in contact with an electrolytic solution or may be in contact with an electrolytic solution during the assembly of electrolytic condensers and lithium-ion batteries.

[Background Art]

Electrochemical devices use many pressure-sensitive adhesive tapes in their production process. For example, in the production process of lithium-ion batteries, pressure-sensitive adhesive tapes are used for various purposes such as the prevention of separator penetration due to a foreign matter, a burr, or the like, the suppression of active material separation, and the fixing of the wound end of a laminate composed of electrode plates, a separator, and the like when the laminate is wound and packed into a battery case.

In particular, a pressure-sensitive adhesive tape that is bonded to a part that may be in contact with an electrolytic solution, for example, a part inside a lithium-ion battery, is required to have excellent adhesiveness so as to hold an adherend even when the adhesive tape is immersed in the electrolytic solution. However, in the pressure-sensitive adhesive tape having a large thickness of pressure-sensitive adhesive layer in order to increase the adhesiveness, a pressure-sensitive adhesive is likely to protrude from an end face, that is, the pressure-sensitive adhesive tape is likely to lead to "adhesive protrusion", and therefore has a problem of interfering with winding operation, for example, the adhesive that protruded during winding a laminate composed of electrode plates and a separator is bonded to an opposite separator.

In recent years, such an electrochemical device is required to have a higher capacity. To address this demand, a pressure-sensitive adhesive tape is required to have an extremely small thickness. A pressure-sensitive adhesive layer having a smaller thickness is unlikely to lead to the "adhesive protrusion" but has a problem of insufficient adhesiveness. If an pressure-sensitive adhesive tape is removed in an electrolytic solution, an active material is separated, and a pressure-sensitive adhesive component is eluted into the electrolytic solution and is reacted with an electrolyte to reduce electrolytic solution characteristics, whereby the battery characteristics are consequently reduced (for example, Patent Document 1).

A common pressure-sensitive adhesive tape, which is mainly composed of a base and an pressure-sensitive adhesive, absorbs water from the air into the base and the pressure-sensitive adhesive layer to retain the water. It is known that, when such a pressure-sensitive adhesive tape is used in an electrochemical device, the water retained in the base and the pressure-sensitive adhesive layer is released into an electrolytic solution to cause troubles in the electrochemical device. In particular, the lithium-ion battery includes the electrolytic solution containing a lithium salt having high reactivity. Hence, the lithium salt immediately reductively decomposes the water that is released into the electrolytic solution to increase the internal pressure of the battery or to cause corrosion of a battery member, and consequently the battery characteristics are likely to be reduced.

That is, there has not been developed a pressure-sensitive adhesive tape for an electrochemical device that is unlikely to lead to "adhesive protrusion", that has excellent adhesiveness, and that has an extremely low water content.

[Citation List]

[Patent Literature]

    Patent Document 1: Japanese Unexamined Patent Application No. 11-176476

[Summary of Invention]

[Technical Problem]

Therefore, it is an object of the present invention to provide a pressure-sensitive adhesive tape for an electrochemical device that has an extremely low water content, that is unlikely to lead to "adhesive protrusion", and that is not removed even when it is in contact with an electrolytic solution.

[Solution to Problem]

The inventors of the present invention have studied intensively in order to solve the problems, and as a result have found that a pressure-sensitive adhesive tape including a pressure-sensitive adhesive layer that is composed of an acrylic pressure-sensitive adhesive and that has a gel content and a thickness each within a particular range is unlikely to lead to "adhesive protrusion", and has an excellent adhesiveness, that the use of a pressure-sensitive adhesive tape having an extremely low water absorption rate can prevent electrochemical device troubles that are caused by water contained in the pressure-sensitive adhesive tape itself, and that a pressure-sensitive adhesive tape having these features is extremely useful for electrochemical devices. The present invention has been completed on the basis of the findings.

That is, the present invention provides a pressure-sensitive adhesive tape for an electrochemical device that includes a pressure-sensitive adhesive layer composed of an acrylic pressure-sensitive adhesive on at least one side of a plastic base. The pressure-sensitive adhesive layer has a gel content of 60% or more and a thickness of 1 to 15 $\mu$m, and the pressure-sensitive adhesive tape has a water absorption rate of 0.2% or less after immersion in water at 23°C for 24 hours.

It is preferable that the acrylic pressure-sensitive adhesive includes an acrylic polymer obtained by polymerization of a monomer component including at least an alkyl (meth)acrylate containing an alkyl group having 6 to 10 carbon atoms and a monomer containing a group reactive with isocyanate, and that the monomer component includes the alkyl (meth)acrylate containing an alkyl group having 6 to 10 carbon atoms in an amount of 80% by weight or more.

It is preferable that the group reactive with isocyanate is a hydroxy group or a carboxyl group.

It is preferable that the monomer component constituting the acrylic polymer includes the monomer containing a group reactive with isocyanate in an amount of 1 to 10% by weight.

It is preferable that the alkyl (meth)acrylate containing an alkyl group having 6 to 10 carbon atoms is one or more compounds selected from 2-ethylhexyl (meth)acrylate, isooctyl (meth)acrylate, and isononyl (meth) acrylate.

[Advantageous Effects of Invention]

The pressure-sensitive adhesive tape for an electrochemical device of the present invention is unlikely to lead to "adhesive protrusion", can maintain excellent adhesiveness even when it is immersed in an electrolytic solution, and can continue to hold an adherend in the electrolytic solution. The pressure-sensitive adhesive tape has a low water absorption rate and extremely small water content, and hence, even when it is used for bonding in an electrochemical device, the electrochemical device does not cause troubles by water. Therefore, it is applied to electrochemical devices, in particular, it is applied in the production of lithium-ion batteries to an area that is immersed in an electrolytic solution or an area that may be in contact with an electrolytic solution, can suppress troubles such as degradation of the electrolytic solution, internal pressure increase of the battery, and corrosion of a battery member, and can achieve the prevention of separator penetration due to a foreign matter, a burr, or the like, the suppression of active material separation, and the improvement of suitable packing of an electrode into a battery case.

[Brief Description of Drawings]

Fig. 1 is a schematic cross-sectional view showing an example of the pressure-sensitive adhesive tape for an electrochemical device of the present invention;
Fig. 2 is a schematic cross-sectional view showing another example of the pressure-sensitive adhesive tape for an electrochemical device of the present invention; and
Figs. 3 are schematic views showing usage examples of the pressure-sensitive adhesive tape for an electrochemical device of the present invention in a lithium-ion battery; Fig. (3-1) is a figure before use; Fig. (3-2) is a figure of the pressure-sensitive adhesive tapes for an electrochemical device of the present invention that are bonded to an electrode plate and the like; and Fig. (3-3) is a figure of a wound electrode plate that is fixed with the pxessuxe-sensitive adhesive tape for an electrochemical device of the present invention.

[Description of Embodiments]

Hereinafter, embodiments of the present invention will be described in detail with reference to drawings as necessary.

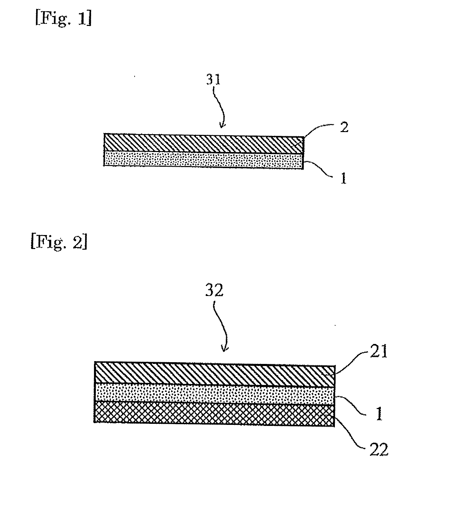

Fig. 1 is a schematic cross-sectional view showing an example of the pressure-sensitive adhesive tape for an electrochemical device of the present invention. The pressure-sensitive adhesive tape 31 for an electrochemical device has a structure including a pressure-sensitive adhesive layer 2 stacked on one side of a base 1.

Fig. 2 is a schematic cross-sectional view showing another example of the pressure-sensitive adhesive tape for an electrochemical device of the present invention. The pressure-sensitive adhesive tape 32 for an electrochemical device has a structure including a pressure-sensitive adhesive layer 21 stacked on one side of a base 1 and a pressure-sensitive adhesive layer 22 stacked on the other side.

[Pressure-Sensitive Adhesive Layer]

The pressure-sensitive adhesive layer of the present invention is characterized by being composed of an acrylic pressure-sensitive adhesive. The acrylic pressure-sensitive adhesive includes at least an acrylic polymer as a base polymer.

A monomer component constituting the acrylic polymer preferably includes an alkyl (meth)acrylate containing an alkyl group having 6 to 10 carbon atoms in an amount of 80% by weight or more (preferably 90% by weight or more and particularly preferably 95% by weight or more) based on the total weight (100% by weight) of the monomer component constituting the acrylic polymer. The content of alkyl (meth)acrylates containing an alkyl group having 5 or less carbon atoms is preferably less than 20% by weight (more preferably less than 5% by weight, particularly preferably less than 0.1% by weight, and most preferably 0% by weight) based on the total weight (100% by weight) of the monomer component constituting the acrylic polymer. The content of alkyl (meth)acrylates containing an alkyl group having 11 or more carbon atoms is preferably less than 20% by weight (more preferably less than 5% by weight, particularly preferably less than 0.1% by weight, and most preferably 0% by weight) based on the total weight (100% by weight) of the monomer component constituting the acrylic polymer. An alkyl group having 5 or less carbon atoms is hydrophilic. Hence, an excessively high ratio of the alkyl (meth)acrylate containing an alkyl group having 5 or less carbon atoms based on the total weight (100% by weight) of the monomer component constituting the acrylic polymer leads to easy water absorption and is likely to cause troubles in an electrochemical device by water. In addition, such a pressure-sensitive adhesive layer has a higher Tg and the initial adhesion characteristics are likely to be reduced. Furthermore, an excessively high ratio of the alkyl (meth)acrylate containing an alkyl group having 11 or more carbon atoms based on the total weight (100% by weight) of the monomer component constituting the acrylic polymer makes the adhesive so soft as to readily cause "adhesive protrusion", and is likely to reduce the adhesiveness as well.

Examples of the alkyl (meth)acrylate containing an alkyl group having 6 to 10 carbon atoms include alkyl (meth) acrylates containing a straight or branched chain alkyl group having 6 to 10 carbon atoms, such as hexyl (meth)acrylate, heptyl (meth)acrylate, octyl (meth)acrylate, 2-ethylhexyl (meth)acrylate (2-EHA), isooctyl (meth)acrylate, nonyl (meth) acrylate, isononyl (meth)acrylate, decyl (meth)acrylate, and isodecyl (meth)acrylate. In the present specification, "(meth) acrylate" means "acrylate" and/or "methacrylate".

The acrylic polymer in the present invention is preferably a polymer (copolymer) obtained by polymerization of the alkyl (meth)acrylate containing an alkyl group having 6 to 10 carbon atoms as a main monomer and a functional group-containing monomer that improves the adhesiveness.

Examples of the functional group-containing monomer include carboxyl group-containing monomers such as (meth)acrylic acid, itaconic acid, maleic acid, fumaric acid, crotonic acid, and isocrotonic acid (including acid anhydride group-containing monomers such as maleic anhydride and itaconic anhydride); hydroxy group-containing monomers such as hydroxyalkyl (meth)acrylates including 2-hydroxyethyl (meth)acrylate, 2-hydroxypropyl (meth)acrylate, 3-hydroxypropyl (meth)acrylate, 4-hydroxybutyl (meth)acrylate, and 6-hydroxyhexyl (meth)acrylate, vinyl alcohol, and allyl alcohol; amide group-containing monomers such as (meth)acrylamide; N-substituted amide group-containing monomers such as N-methyl(meth)acrylamide, N-ethyl(meth)acrylamide, N,N-dimethyl(meth)acrylamido, N-t-butyl(meth)acrylamide, N-methylol(meth)acrylamide, N-methoxymethyl(meth)acrylamide, N-ethoxymethyl(meth)acrylamide, N-butoxymethyl(meth)acrylamide, N-octylacrylamide, and N-hydroxyethylacrylamide; amino group-containing monomers such as aminoethyl (meth)acrylate, dimethylaminoethyl (methacrylate, diethylaminoethyl (meth)acrylate, dimethylaminopropyl (meth)acrylate, and t-butylaminoethyl (meth)acrylate; and glycidyl group-containing monomers such as glycidyl (meth)acrylate and methylglycidyl (meth)acrylate. Among the functional group-containing monomers, the carboxyl group-containing monomers and the hydroxy group-containing monomers are preferred because of the excellent adhesion retention properties in an electrolytic solution, and the carboxyl group-containing monomers [for example, acrylic acid (AA)] are particularly preferred because of the excellent initial adhesiveness.

The content of the functional group-containing monomer is, for example, about 1 to 10% by weight (preferably about 1 to 7% by weight and particularly preferably about 1 to 5% by weight) based on the total weight (100% by weight) of the monomer component constituting the acrylic polymer. The functional group-containing monomer having a content less than the range is likely to reduce the gel content to interfere with sufficient adhesiveness. The functional group-containing monomer having a content more than the range is likely to increase the water absorption rate to interfere with the suppression of troubles in an electrochemical device by water.

The acrylic polymer of the present invention can be prepared by polymerization of the monomer component in accordance with a known or common polymerization method such as solution polymerization, emulsification polymerization, bulk polymerization, and polymerization by irradiation with active energy rays (active energy ray polymerization). Among them, the solution polymerization and the active energy ray polymerization are preferred and the solution polymerization is more preferred because such methods can produce a polymer having excellent transparency and water resistance and are low cost.

The solution polymerization may employ various common solvents. Examples of such solvents include organic solvents including esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane and ketones such as methyl ethyl ketone and methyl isobutyl ketone. These solvents may be used singly or in combination of two or more of them.

The polymerization of the monomer component may employ a polymerization initiator. The polymerization initiator is not necessarily limited and can be suitably selected from known or common initiators for use. Examples include oil-soluble polymerization initiators including azo polymerization initiators such as 2,2'-azobisisobutyronitrile (AIBN), 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), and dimethyl 2,2'-azobis(2-methylpropionate); and peroxide polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethyleyelohexane, and 1,1-bis(t-butylperoxy)cyclododecane. These polymerization initiators may be used singly or in combination of two or more of them. The amount of the polymerization initiator is not specifically limited and may be in a range for a common polymerization initiator.

The acrylic polymer of the present invention has, for example, a weight average molecular weight (Mw) of about 300,000 to 1,200,000 and preferably about 400,000 to 1,000,000. The acrylic polymer having a weight average molecular weight of less than 300,000 cannot achieve adhesive power and cohesive power that is required for the pressure-sensitive adhesive layer and is likely to reduce the durability. The acrylic polymer having a weight average molecular weight of more than 1,200,000 increases the viscosity of the pressure-sensitive adhesive composition and may cause problems such as poor coating properties.

The weight average molecular weight (Mw) can be determined by gel permeation chromatography (GPC). More specifically, it can be determined by using a GPC measurement device, trade name "HLC-8120GPC" (manufactured by TOSOH CORPORATION), under the following GPC measurement conditions in terms of polystyrene molecular weight.

<Measurement Conditions for GPC>

    Sample concentration: 0.2% by weight (in a tetrahydrofuran solution)
    Sample injection volume: 10 $\mu$L
    Eluant: tetrahydrofuran (THF)
    Flow rate: 0.6 mL/min
    Column temperature (measurement temperature): 40°C
    Column: trade name "TSKgel SuperHM-H/H4000/H3000/H2000" (manufactured by TOSOH CORPORATION)
    Detector: differential refractive index detector (RI)

The acrylic polymer of the present invention is preferably cross-linked by suitable cross-linking means (for example, the addition of a cross-linking agent). The cross-linking treatment can adjust a gel content of the pressure-sensitive adhesive layer.

Examples of the cross-linking agent includes an epoxy compound, an isocyanate compound, a metal chelate compound, a metal alkoxide, a metal salt, an amine compound, a hydrazine compound, and an aldehyde compound. These cross-linking agents can be selected for use depending on a functional group contained in the acrylic polymer. In the invention, among them, the isocyanate compound is preferably used from the viewpoint of excellent anchoring properties to a plastic base.

Examples of the isocyanate compound include polyfunctional isocyanate compounds such as a bifunctional isocyanate compound and a trifunctional isocyanate compound. Examples of the bifunctional isocyanate compound include lower aliphatic diisocyanates such as butylene diisocyanate and hexamethylene diisocyanate; alicyclic diisocyanates such as cyclopentylene diisocyanate, cyclohexylene diisocyanate, and isophorone diisocyanate; and aromatic diisocyanates such as 2,4-tolylene diisocyanate, 4,4'-diphenylmethane diisocyanate, and xylylene diisocyanate. Examples of the trifunctional isocyanate compound include trifunctional isocyanate adducts such as a trimethylolpropane/tolylene diisocyanate trimer adduct (trade name "CORONATE L", manufactured by NIPPON POLYURETHANE INDUSTRY CO., LTD.), a trimethylolpropane/hexamethylene diisocyanate trimer adduct (trade name "CORONATE HL", manufactured by NIPPON POLYURETHANE INDUSTRY CO., LTD.), and an isocyanurate of hexamethylene diisocyanate (trade name "CORONATE HX", manufactured by NIPPON POLYURETHANE INDUSTRY CO., LTD.). These compounds may be used singly or in combination of two or more of them.

For the cross-linking agent in the present invention, the trifunctional isocyanate compound is preferred because it has excellent reactivity and can cure a polymer more immediately.

The amount of the cross-linking agent is, for example, about 0.01 to 20 parts by weight, preferably about 0.1 to 15 parts by weight, and particularly preferably about 1 to 10 parts by weight, based on 100 parts by weight of the acrylic polymer. The cross-linking agent having an amount lower than the range reduces the gel content and leads to insufficient aggregation to be likely to interfere with the adhesiveness, and the cross-linking agent having an amount more than the range hardens the pressure-sensitive adhesive to be likely to reduce the adhesiveness.

The acrylic pressure-sensitive adhesive in the present invention may include other components (for example, a tackifier, a plasticizer, a filler, and an antioxidant) in addition to the acrylic polymer and the cross-linking agent.

The pressure-sensitive adhesive layer of the present invention can be formed as follows: the acrylic pressure-sensitive adhesive is diluted using a solvent (for example, toluene, xylene, ethyl acetate, and methyl ethyl ketone) as necessary to prepare a coating liquid; and the coating liquid is applied onto a base directly or onto an appropriate separator (for example, a release paper) and dried. The pressure-sensitive adhesive layer of the present invention may be a single layer or a laminate of two or more layers. When the pressure-sensitive adhesive layer is the laminate of two or more layers, each layer may have the same composition, or layers having different compositions may be combined for the lamination. When the base has the pressure-sensitive adhesive layers on both sides, these pressure-sensitive adhesive layers may have the same composition or different compositions.

The pressure-sensitive adhesive layer of the present invention has a gel content of 60% or more (preferably 65% or more). In the invention, the gel content is the weight ratio (% by weight) of residual components that are not eluted when the pressure-sensitive adhesive layer is immersed in ethyl acetate for a predetermined period of time with respect to the pressure-sensitive adhesive layer (100% by weight). The pressure-sensitive adhesive layer having a gel content lower than the range reduces the cohesive power of the pressure-sensitive adhesive to readily lead to "adhesive protrusion". Then, the pressure-sensitive adhesive may be dissolved in an electrolytic solution used in an electrochemical device to reduce the adhesiveness and to adversely affect the electrochemical device.

The pressure-sensitive adhesive layer of the present invention has a thickness (total thickness for a laminate of two or more layers) of 1 to 15$\mu$m (preferably 1 to 10$\mu$m). The pressure-sensitive adhesive layer having a thickness less than the range reduces the adhesive strength, and the pressure-sensitive adhesive tape is likely to be removed in an electrolytic solution to cause the degradation of the electrolytic solution. The pressure-sensitive adhesive layer having a thickness more than the range leads to an excess volume in an electrochemical device to be likely to interfere with the achievement of higher capacity of the electrochemical device. In addition, such a pressure-sensitive adhesive layer is likely to interfere with the prevention of "adhesive protrusion".

[Base]

For the base, a base having a low water absorption rate is preferably used, and the invention is characterized by using a plastic base. Examples of the material of the plastic base include polyesters (for example, polyethylene terephthalate, polyethylene naphthalate, polybutylene terephthalate, and polybutylene naphthalate), polyolefins (for example, polyethylene, polypropylene, polymethylpentene, and an ethylene-propylene copolymer), polyvinyl alcohol, polyvinylidene chloride, polyvinyl chloride, a vinyl chloride-vinyl acetate copolymer, polyvinyl acetate, polyamide, polyimide, celluloses, a fluorine resin, polyether, polyether amide, polyether nitrile, polyether ether ketone, polyphenylene sulfide, polystyrene resins (for example, polystyrene), polycarbonate, and polyethersulfone. These materials may be used singly or in combination of two or more of them.

In the invention, among them, the base is preferably formed from a resin material selected from polyesters such as polyethylene terephthalate, polyolefins such as polypropylene, and a fluorine resin from the viewpoint of excellent heat resistance, and in particular, a base formed from a material composed of polyolefins such as polypropylene is preferably used from the viewpoint of excellent heat resistance and low water absorption rate.

The base of the present invention may be a single layer or a laminate of two or more layers. When the base is the laminate of two or more layers, each layer may have the same composition, or layers having different compositions may be combined for the lamination.

The base may have a surface that is subjected to a common surface treatment, for example, oxidation treatment by a chemical or physical method such as chromate treatment, exposure to ozone, exposure to flame, exposure to high-voltage electric shock, and treatment with ionizing radiation, as necessary, in order to improve the adhesion with the pressure-sensitive adhesive layer and the like.

The thickness of the base is not necessarily limited, but is preferably about 8 to 100 $\mu$m and more preferably about 10 to 50 $\mu$m. The base having a thickness less than the range may lead to insufficient strength of the pressure-sensitive adhesive tape to interfere with practical use. The base having a thickness more than the range is likely to lead to an excess volume in an electrochemical device to interfere with the achievement of higher capacity of the electrochemical device.

[Pressure-sensitive adhesive tape for electrochemical device]

The pressure-sensitive adhesive tape for an electrochemical device of the present invention includes the pressure-sensitive adhesive layer on at least one side of the base. The pressure-sensitive adhesive tape for an electrochemical device of the present invention can be formed by a known or common method. For example, the acrylic pressure-sensitive adhesive to constitute the pressure-sensitive adhesive layer is diluted using a solvent (for example, toluene, xylene, ethyl acetate, and methyl ethyl ketone) as necessary to prepare a coating liquid; and the coating liquid is directly applied onto the base to form a pressure-sensitive adhesive layer; or the coating liquid is applied onto an appropriate separator (for example, a release paper) to form a pressure-sensitive adhesive layer, and the pressure-sensitive adhesive layer is transferred onto the base. The formation by transferring may leave a void (space) in the interface with the base. In this case, the pressure-sensitive adhesive tape may be treated with heat and pressure using an autoclave or the like to diffuse the void for disappearance.

The application of the coating liquid may employ a common coater such as a gravure roll coater, a reverse roll coater, a kiss roll coater, a dip roll coater, a bar coater, a knife coater, a spray coater, a comma coater, and a direct coater.

Alternatively, the pressure-sensitive adhesive tape for an electrochemical device of the present invention can be formed by melt extrusion of the base material and the acrylic pressure-sensitive adhesive to integrate each other. For the melt extrusion, any of known techniques such as inflation method and T-die method may be employed. After the extrusion, a stretching treatment in a longitudinal or transverse direction (uniaxial stretching) or a sequential or simultaneous stretching treatment in longitudinal and transverse directions (biaxial stretching) may be carried out.

The pressure-sensitive adhesive tape for an electrochemical device of the present invention can be bonded to an adherend by pressing, for example, at a pressure of about 0.5 to 10 kg/cm$^2$. The temperature during the pressing is not necessarily limited and is, for example, about 10 to 180°C.

The adhesive strength (with respect to an aluminum foil) after the pressing is, for example, a 180 degree peel adhesion to an aluminum foil at 25°C (in accordance with Japanese Industrial Standard Z 0237, with respect to an aluminum foil, a peeling rate of 300 mm/min, adhesive strength before immersion) of about 0.5 N/10 mm or more (preferably 1.0 N/10mm or more and particularly preferably 1.05 to 2.5 N/10 mm).

The adhesive strength (with respect to an aluminum foil) of the pressure-sensitive adhesive tape for an electrochemical device of the present invention after the immersion in a mixed solvent of ethylene carbonate/diethyl carbonate [the former/the latter (volume ratio) = 1/1] at 60°C for 8 hours is, for example, a 180 degree peel adhesion (in accordance with Japanese Industrial Standard Z 0237, with respect to an aluminum foil, a peeling temperature of 25°C, a peeling rate of 300 mm/min, adhesive strength after immersion) of 0.5 N/10mm or more [preferably 1.0 N/10mm or more (for example, 1.0 to 2.5 N/10 mm)]. The pressure-sensitive adhesive tape having an adhesive strength to an aluminum foil after immersion less than the range is readily removed in an electrolytic solution when it is used in an lithium-ion battery, and thus interferes with the suppression of the degradation of the electrolytic solution.

The pressure-sensitive adhesive tape for an electrochemical device of the present invention has a water absorption rate of 0.2% or less (preferably 0.15% or less and particularly preferably 0.10% or less) after immersion in water at 23°C for 24 hours. The pressure-sensitive adhesive tape having a water absorption rate more than the range interferes with the suppression of troubles in an electrochemical device caused by water.

The pressure-sensitive adhesive tape for an electrochemical device of the present invention may include a separator (release liner) on the surface of the pressure-sensitive adhesive layer in order to protect the pressure-sensitive adhesive layer surface and to prevent blocking. The separator is removed when the pressure-sensitive adhesive tape for an electrochemical device of the present invention is bonded to an adherend, and is not necessarily included. The separator to be used is not specifically limited, and known or common release papers and the like may be used. Examples of the separator to be used include bases having release layers such as a plastic film and paper having a surface treated with a release agent such as a silicone release agent, a long-chain alkyl release agent, a fluorine release agent, and a molybdenum sulfide release agent; low adhesive bases composed of fluorine polymers such as polytetrafluoroethylene, polychlorotrifluoroethylene, polyvinyl fluoride, polyvinylidene fluoride, a tetrafluoroethylene-hexafluoropropylene copolymer, and a chlorofluoroethylene-vinylidene fluoride copolymer; and low adhesive bases composed of non-polar polymers such as an olefinic resin (for example, polyethylene and polypropylene).

When the pressure-sensitive adhesive tape for an electrochemical device of the present invention is a double-sided pressure-sensitive adhesive tape, the separators may be provided on faces of both pressure-sensitive adhesive layers of the pressure-sensitive adhesive tape for an electrochemical device of the present invention; or the separator having a back release layer may be provided on one adhesive face, and the sheet is wound so that the back release layer of the separator will be in contact with the other face of the pressure-sensitive adhesive layer.

The pressure-sensitive adhesive tape for an electrochemical device of the present invention is suitably used, for example, for the production of a secondary battery including a nonaqueous electrolytic solution, such as a lithium-ion battery.

Examples of the nonaqueous electrolytic solution include, but are not necessarily limited to, an electrolytic solution of a lithium salt such as $LiPF_6$ as an electrolyte dissolved in a mixed solvent of a cyclic carbonate such as propylene carbonate (PC) and ethylene carbonate (EC) and a chain carbonate such as dimethyl carbonate (DMC), ethyl methyl carbonate (EMC), and diethyl carbonate (DEC).

The nonaqueous electrolyte secondary battery such as a lithium-ion battery is composed of an outer can that includes a stacked electrode group in which a positive electrode plate having a positive electrode substrate coated with a positive electrode active material and a negative electrode plate having a negative electrode substrate coated with a negative electrode active material are stacked with a separator interposed therebetween, or a wound electrode group in which a positive electrode plate having a positive electrode substrate coated with a positive electrode active material and a negative electrode plate having a negative electrode substrate coated with a negative electrode active material are spirally wound while opposing to each other with a separator interposed therebetween, and electrode terminals projecting from the positive electrode plate and the negative electrode plate, and an electrolytic solution.

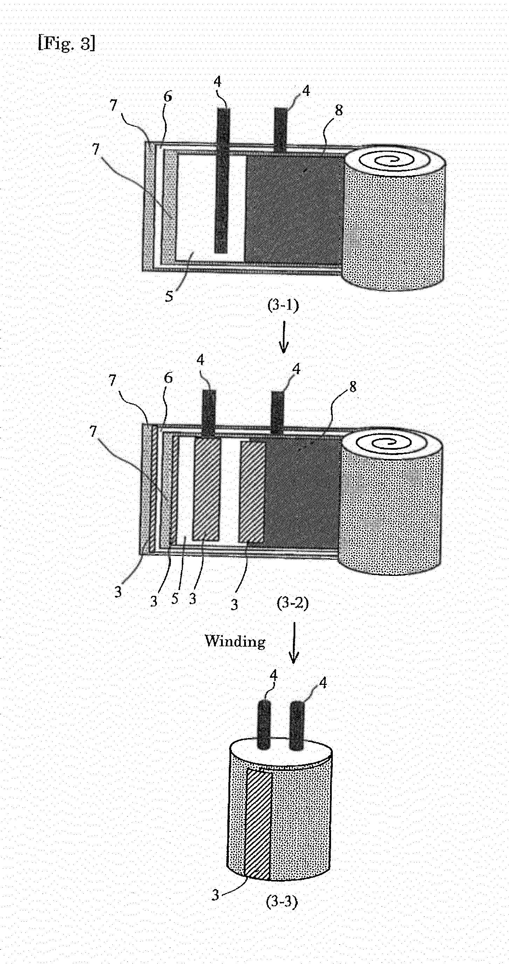

The pressure-sensitive adhesive tape for an electrochemical device of the present invention can be used, for example, in the production of the nonaqueous electrolyte secondary battery such as the lithium-ion battery, by being bonded to members constituting the battery, for example, in order to prevent separator penetration by a foreign matter, a burr, or the like, in order to suppress active material separation, and in order to improve suitable packing of the electrode into the battery case (for example, to fix a laminate composed of the positive electrode plate/the separator/the negative electrode plate or to fix the wound laminate). The bonding position in the members constituting the battery is not specifically limited as long as the objects can be achieved, and examples include an electrode plate, an electrode terminal, an electrode plate edge, a position in a separator to be in contact with an electrode plate edge, a boundary of a coated area and an uncoated area of an active material, and the wound end of a wound electrode group (see Fig. 3).

[Examples]

Hereinafter, the present invention will be described in further detail with reference to examples, but the present invention is not intended to be limited to these examples.

Example 1

First, 97 parts by weight of isononyl acrylate, 3 parts by weight of acrylic acid, 0.1 part by weight of 2,2'-azobisisobutyronitrile (AIBN) as an initiator, and 100 parts by weight of an acetate ester as a solvent were mixed, and $N_2$ substitution was carried out for 2 hours. Under an atmosphere of $N_2$, polymerization was carried out at 60°C for 6 hours to give an acrylic polymer (1) having a weight average molecular weight of 500,000.

To the obtained acrylic polymer (1), a trifunctional isocyanate compound (trade name "CORONATE L", manufactured by NIPPON POLYURETHANE INDUSTRY CO., LTD.) was mixed in a ratio of 5 parts by weight based on the solid content to give an acrylic pressure-sensitive adhesive (1).

The obtained acrylic pressure-sensitive adhesive (1) was applied onto a polypropylene film (OPP) (trade name "TORAYFAN BO #2548", manufactured by Toray Industries Inc., a thickness of 20 $\mu$m) as a base so as to have a thickness after drying of 5 $\mu$m and then dried to give a pressure-sensitive adhesive tape (1).

Example 2

First, 98 parts by weight of isooctyl acrylate, 2 parts by weight of hydroxyethyl acrylate, 0.1 part by weight of AIBN, and 100 parts by weight of toluene as a solvent were mixed, and $N_2$ substitution was carried out for 2 hours. Under an atmosphere of $N_2$, polymerization was carried out at 60°C for 6 hours to give an acrylic polymer (2) having a weight average molecular weight of 500,000.

To the obtained acrylic polymer (2), a trifunctional isocyanate compound (trade name "CORONATE L", manufactured by NIPPON POLYURETHANE INDUSTRY CO., LTD.) was mixed in a ratio of 4 parts by weight based on the solid content to give an acrylic pressure-sensitive adhesive (2).

The obtained acrylic pressure-sensitive adhesive (2) was applied onto a polypropylene film (trade name "TORAYFAN BO #2548", manufactured by Toray Industries Inc., a thickness of 20 $\mu$m) as a base so as to have a thickness after drying of 10 $\mu$m and then dried to give a pressure-sensitive adhesive tape (2).

Example 3

First, 95 parts by weight af 2-ethylhexyl acrylate, 5 parts by weight of acrylic acid, 0.1 part by weight of AIBN, and 100 parts by weight of ethyl acetate were mixed, and $N_2$ substitution was carried out for 2 hours. Under an atmosphere of $N_2$, polymerization was carried out at 60°C for 6 hours to give an acrylic polymer (3) having a weight average molecular weight of 800,000.

To the obtained acrylic polymer (3), a trifunctional isocyanate compound (trade name "CORONATE L", manufactured by NIPPON POLYURETHANE INDUSTRY CO., LTD.) was mixed in a ratio of 3 parts by weight based on the solid content to give an acrylic pressure-sensitive adhesive (3).

The obtained acrylic pressure-sensitive adhesive (3) was applied onto a polypropylene film (trade name "TORAYFAN BO #2548", manufactured by Toray Industries Inc., a thickness of 30 μm) as a base so as to have a thickness after drying of 5 μm and then dried to give a pressure-sensitive adhesive tape (3).

Comparative Example 1

First, 90 parts by weight of butyl acrylate, 10 parts by weight of acrylic acid, 0.1 part by weight of AIBN, and 100 parts by weight of an acetate ester were mixed, and $N_2$ substitution was carried out for 2 hours. Then, polymerization was carried out at 60°C for 6 hours to give an acrylic polymer (4) having a weight average molecular weight of 1,200,000.

To the obtained acrylic polymer (4), a trifunctional isocyanate compound (trade name "CORONATE L", manufactured by NIPPON POLYURETHANE INDUSTRY CO., LTD.) was mixed in a ratio of 2 parts by weight based on the solid content to give an acrylic pressure-sensitive adhesive (4).

The obtained acrylic pressure-sensitive adhesive (4) was applied onto a polyethylene terephthalate film (PET) (trade name "LUMIRROR S10", manufactured by Toray Industries Inc., a thickness of 25 μm) as a base so as to have a thickness after drying of 20 μm and then dried to give a pressure-sensitive adhesive tape (4).

Comparative Example 2

First, 98 parts by weight of butyl acrylate, 20 parts by weight of N-acryloylmorpholine, 2 parts by weight of acrylic acid, 0.1 part by weight of AIBN, and 100 parts by weight of an acetate ester were mixed, and $N_2$ substitution was carried out for 2 hours. Then, polymerization was carried out at 60°C for 6 hours to give an acrylic polymer (5) having a weight average molecular weight of 1,200,000.

To the obtained acrylic polymer (5), a trifunctional isocyanate compound (trade name "CORONATE L", manufactured by NIPPON POLYURETHANE INDUSTRY CO., LTD.) was mixed in a ratio of 2 parts by weight based on the solid content to give an acrylic pressure-sensitive adhesive (5).

The obtained acrylic pressure-sensitive adhesive (5) was applied onto a polypropylene film (trade name "TORAYFAN BO #2548", manufactured by Toray Industries Inc., a thickness of 30 μm) as a base so as to have a thickness after drying of 15 μm and then dried to give a pressure-sensitive adhesive tape (5).

Comparative Example 3

First, 97 parts by weight of butyl acrylate, 3 parts by weight of acrylic acid, 0.1 part by weight of AIBN, and 100 parts by weight of toluene were mixed, and $N_2$ substitution was carried out for 2 hours. Under an atmosphere of $N_2$, polymerization was carried out at 60°C for 6 hours to give an acrylic polymer (6) having a weight average molecular weight of 500,000.

To the obtained acrylic polymer (6), a trifunctional isocyanate compound (trade name "CORONATE L", manufactured by NIPPON POLYURETHANE INDUSTRY CO., LTD.) was mixed in a ratio of 0.5 part by weight based on the solid content to give an acrylic pressure-sensitive adhesive (6).

The obtained acrylic pressure-sensitive adhesive (6) was applied onto a polypropylene film (trade name "TORAYFAN BO #2548", manufactured by Toray Industries Inc., a thickness of 30 μm) as a base so as to have a thickness after drying of 30 μm and then dried to give a pressure-sensitive adhesive tape (6).

Each acrylic pressure-sensitive adhesive and each pressure-sensitive adhesive tape obtained in Examples and Comparative Examples were evaluated for the water absorption rate, the gel content, and the "adhesive protrusion" prevention performance in accordance with the following methods.

<Measurement of water absorption rate>

Each pressure-sensitive adhesive tape obtained in Examples and Comparative Examples was immersed in water at 23°C for 24 hours, and then the water absorption rate (%) was determined in accordance with Japanese Industrial Standard K 7209.

<Measurement of gel content>

Onto a polyethylene terephthalate film (a thickness of 38 μm) surface treated with a release agent, each acrylic pressure-sensitive adhesive obtained in Examples and Comparative Examples was applied, then the coated film was dried at 130°C for 1 minute for removing solvent to form a pressure-sensitive adhesive layer (a thickness of 25 μm). The obtained pressure-sensitive adhesive layer was covered with a release film that was surface treated with a release agent, and aged at 50°C for 4 days to give a pressure-sensitive adhesive layer for gel content measurement.

About 0.1 g of the obtained pressure-sensitive adhesive for gel content measurement was taken, then packed with a porous tetrafluoroethylene sheet having an average pore size of 0.2 μm (trade name "NTF1122", manufactured by Nitto Denko Corporation), next tied with a kite string, and weighed at that time to determine the weight before immersion. The weight before immersion is the total weight of the pressure-sensitive adhesive for gel content measurement, the tetrafluoroethylene sheet, and the kite string. The total weight of the tetrafluoroethylene sheet and the kite string was also measured to be regarded as tare weight.

Next, the pressure-sensitive adhesive for gel content measurement that was packed with the tetrafluoroethylene sheet and tied with the kite string (referred to as "sample") was placed into a 50-ml container filled with ethyl acetate and left at 23°C for 7 days. Then, the sample (after the treatment of ethyl acetate) was taken out from the container, then transferred into an aluminum cup, dried in a dryer at 130°C for 2 hours to remove ethyl acetate, and weighed to determine the weight after immersion. Next, the gel content was calculated based on Equation (1).

$$\text{Gel content (\% by weight)} = (A - B)/(C - B) \times 100 \qquad (1)$$

(in Equation (1), A is the weight after immersion, B is the tare weight, and C is the weight before immersion)

<Evaluation of adhesive protrusion prevention performance>

To the pressure-sensitive adhesive layer face of each pressure-sensitive adhesive tape obtained in Examples and Comparative Examples, a polyethylene terephthalate film that was surface treated with a release agent (a thickness of 38 μm) was bonded and cut into 10 mm x 150 mm to prepare a sample.

The obtained sample was left at 23°C for 24 hours. Then, the sample was placed so that the base face of the sample would be in contact with a stainless steel plate, and pressed with a 2-kg roller in one reciprocal movement. The stainless steel plate was vertically placed. Each sample was observed after 1 hour to be evaluated on the basis of the following criteria.

Criteria

A: The sample was fallen.
B: The sample was held on the stainless steel plate without falling.

The results are summarized in Table 1.

[Table 1]

Table 1

| | | Example | | | Comparative Example | | |
|---|---|---|---|---|---|---|---|
| | | 1 | 2 | 3 | 1 | 2 | 3 |
| Pressure-sensitive adhesive layer | Isononyl acrylate | 97 | | | | | |
| | Isooctyl acrylate | | 98 | | | | |
| | 2-ethylhexyl acrylate | | | 95 | | | |
| | Butyl acrylate | | | | 90 | 98 | 97 |
| | Acrylic acid | 3 | | 5 | 10 | 2 | 3 |
| | Hydroxyethyl acrylate | | 2 | | | | |
| | N-acryloylmorpholine | | | | | 20 | |
| | CORONATE L | 5 | 4 | 3 | 2 | 2 | 0.5 |
| | Thickness | 5 | 10 | 5 | 20 | 15 | 30 |
| Base | OPP | 20 | 20 | 30 | | 30 | 30 |
| | PET | | | | 25 | | |
| Evaluation | Water absorption rate (%) | 0.14 | 0.08 | 0.05 | 0.49 | 2.68 | 0.26 |
| | Gel content (%) | 85 | 80 | 70 | 95 | 70 | 40 |
| | Adhesive protrusion prevention performance | A | A | A | A | A | B |

[Reference Signs List]

1        Base
2, 21, 22    Pressure-sensitive adhesive layer
3, 31, 32    Pressure-sensitive adhesive tape for electrochemical device
4        Electrode terminal
5        Positive electrode plate
6        Negative electrode plate
7        Separator
8        Active material

**Claims**

1. A pressure-sensitive adhesive tape for an electrochemical device comprising a pressure-sensitive adhesive layer composed of an acrylic pressure-sensitive adhesive on at least one side of a plastic base,
the pressure-sensitive adhesive layer having a gel content of 60% or more and a thickness of 1 to 15 $\mu$m, and
the pressure-sensitive adhesive tape having a water absorption rate of 0.2% or less after immersion in water at 23°C for 24 hours.

2. The pressure-sensitive adhesive tape for an electrochemical device according to claim 1, wherein the acrylic pressure-sensitive adhesive includes an acrylic polymer obtained by polymerization of a monomer component including at least an alkyl (meth)acrylate containing an alkyl group having 6 to 10 carbon atoms and a monomer containing a group reactive with isocyanate, and the monomer component includes the alkyl (meth)acrylate containing an alkyl group having 6 to 10 carbon atoms in an amount of 80% by weight or more.

3. The pressure-sensitive adhesive tape for an electrochemical device according to claim 2, wherein the group reactive with isocyanate is a hydroxy group or a carboxyl group.

4. The pressure-sensitive adhesive tape for an electrochemical device according to claim 2 or 3, wherein the monomer component constituting the acrylic polymer includes the monomer containing a group reactive with isocyanate in an amount of 1 to 10% by weight.

5. The pressure-sensitive adhesive tape for an electrochemical device according to any one of claims 2 to 4, wherein the alkyl (meth)acrylate containing an alkyl group having 6 to 10 carbon atoms is one or more compounds selected from 2-ethylhexyl (meth)acrylate, isooctyl (meth)acrylate, and isononyl (meth)acrylate.

EP 2 514 793 A1

[Fig. 1]

[Fig. 2]

[Fig. 3]

(3-1)

(3-2)

Winding

(3-3)

Europäisches
Patentamt

European
Patent Office

Office européen
des brevets

# EUROPEAN SEARCH REPORT

**Application Number**

EP 11 18 6278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/129988 A1 (OOTAKE HIRONAO [JP] ET AL) 27 May 2010 (2010-05-27) * paragraph [0068] - paragraph [0073]; claims 1,3; examples; table 1 * ----- | 1-5 | INV. C09J7/02 C09J133/06 H01M2/08 H01M4/66 H01M2/02 H01M2/04 H01M2/16 |
| A | JP 2002 138261 A (NITTO DENKO CORP) 14 May 2002 (2002-05-14) * abstract * * Comp. Example 1; table 1 * ----- | 1-5 | |
| X | JP 2001 074933 A (NITTO DENKO CORP) 23 March 2001 (2001-03-23) * abstract * * example 1 * ----- | 1-5 | |

**TECHNICAL FIELDS SEARCHED (IPC)**

C09J

The present search report has been drawn up for all claims

| Place of search | Date of completion of the search | Examiner |
|---|---|---|
| Munich | 31 July 2012 | Meier, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 18 6278

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2012

| Patent document cited in search report | Publication date | Patent family member(s) | Publication date |
|---|---|---|---|
| US 2010129988 A1 | 27-05-2010 | JP 2010129699 A<br>US 2010129988 A1 | 10-06-2010<br>27-05-2010 |
| JP 2002138261 A | 14-05-2002 | NONE | |
| JP 2001074933 A | 23-03-2001 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11176476 A